# EUROPEAN PATENT APPLICATION

(11) **EP 1 197 395 A2**
(43) Date of publication of application: **17.04.2002**
(21) Application number: 01123876.3
(22) Date of filing: 05.10.2001
(51) Int. Cl.: B60R 13/10

(54) **Number-plate holder for vehicles**

(30) Priority: 13.10.2000 IT RE000032 U
(71) Applicant: Meta System S.p.A., 42100 Reggio Emilia (IT)
(72) Inventor: Simonazzi, Giuseppe, 42100 Reggio Emilia (IT)
(74) Representative: Lecce, Giovanni

(57) **Abstract**

A front and/or rear plate-holder (1) for vehicles in general is provided with at least a supporting means (6, 6', 8, 8', 8"), either integral or fastened to said plate-holder and containing at least a seat (7) for the containment and fastening of apparatuses or devices (3), positioned on the outside of vehicle. The supporting means (8") may be integral or fastened to an external frame (11) of standard size for the coupling to the plate-holder.

## Description

### BACKGROUND OF THE INVENTION

### Field of the invention

The present invention relates to a plate-holder for vehicles.

More particularly, the present invention relates to a plate-holder for vehicles particularly suitable for being mounted either on vehicles being produced (first assembly) or those already produced (second assembly).

### Description of the prior art

As is known, it is at present difficult, if not impossible, to realize electronic devices provided with peripheral sensors, so conformed as to allow to mount them on the vehicles that are marketed without the necessity of carrying out specific fastening and/or support operations on the body or the bumpers. Every known vehicle has, in fact, different attachment points or points for the directing fitting of the sensors through holes that are different according to the type of body and/or bumpers, which, besides being not liked by users, are often difficult to be obtained because of the insufficient space available.

In case of first assembly applications, such problems are directly faced and solved by the Makers which, for each vehicle model, design and realize the devices and the corresponding means and/or rooms dedicated to the installation, so as to impart them an harmonious association within the general style frame of the vehicles. It is however evident that all this involves a marked economic increase because of the specific design, the realization of many additional necessary details as well as the additional installation and testing times.

Instead, in second assembly applications, the problems are even more complex and unwelcome, as the positioning of sensors may be not optimal and require the adoption of brackets or external supports that are not in accordance with the aesthetic of the vehicles.

Another drawback arises from the fact that, for every vehicle model, the electronic devices and the related details or accessories for the assembly and the fastening may be different, which leads to the necessity of creating big stocks such as to satisfy market demand.

### SUMMARY OF THE INVENTION

Object of the present invention is to eliminate the above drawbacks.

More particularly, object of the present invention is to provide a front and rear plate-holder able to support both the plate-holder as well as the electronic apparatuses or devices, such as distance sensors, external transducers, microtelecameras and like devices positioned on the outside of vehicles, and suitable for first and second assembly applications.

According to the present invention, these and other objects that will become apparent thanks to the following description are achieved by a front or rear plate-holder for vehicles, comprising a seat for the containment of a plate-holder having perfectly standardized shape and size, and provided with means for the fastening to the body, the bumpers and/or the plate-holder and, according to the present invention, at least a supporting means containing at least a containment and fastening seat for apparatuses and devices positioned on the outside of vehicles.

The advantages achieved with the plate-holder of the present invention lie essentially in that the application of front and rear electronic devices, such as sensors for the monitoring of safety distance, external transducers of devices suitable for facilitating driving in case of fog and/or rain and/or snow, microtelecameras for the visual control of the space available during parking operations and/or the maneuvers to be carried out in narrow spaces and the like, is realized in a simple, quick, safe and economical manner, without having to carry out any operations on the existing structures of vehicle bodies and/or bumpers.

### BRIEF DESCRIPTION OF THE DRAWINGS

The constructive and functional characteristics of the plate-holder of the present invention will be better understood thanks to the following description, wherein reference is made to some embodiments reported only by way of non limiting examples, and wherein:
Figure 1 shows the perspective schematic view of a first embodiment of a plate-holder according to the invention, with lateral integral housings for the direct application of electronic apparatuses or devices, or parts thereof,
Figure 2 shows the perspective schematic view of a second embodiment of a plate-holder according to the invention, comprising attachment means for lateral supports dedicated to the engagement of said electronic apparatuses or devices, or parts thereof, and
Figure 3 shows the perspective schematic view of a third embodiment of the plate-holder according to the invention, attached to lateral supports and an external frame provided also with housings for the aforesaid electronic apparatuses or devices, or parts thereof.

### DESCRIPTION OF THE PREFERRED EMBODIMENTS

Vehicle Makers have been keeping up for several years with the standardization of some details, as concems both the shape and the size. In particular, as concerns vehicle bodies and bumpers, there have been established the position, shape and size of the front and rear plates and, consequently, of the corresponding plate-holders. It ensues that, independently on the vehicle brand and model, one may rely on an absolutely standardized sizing.

The figures refer to standard plate-holders of the aforesaid type which, besides the main object of supporting and fastening the front and rear plates 2, comprise integral or added means suitable to house and contain the electronic apparatuses or devices 3 or parts thereof, or sensors or any other signaling device intended for being positioned on the outside of vehicles.

In this way it is possible to configure universal type devices, such as to be applicable on vehicles of any brand and/or model, without any diversification and with equal possibility of installation either on the first or the second assembly.

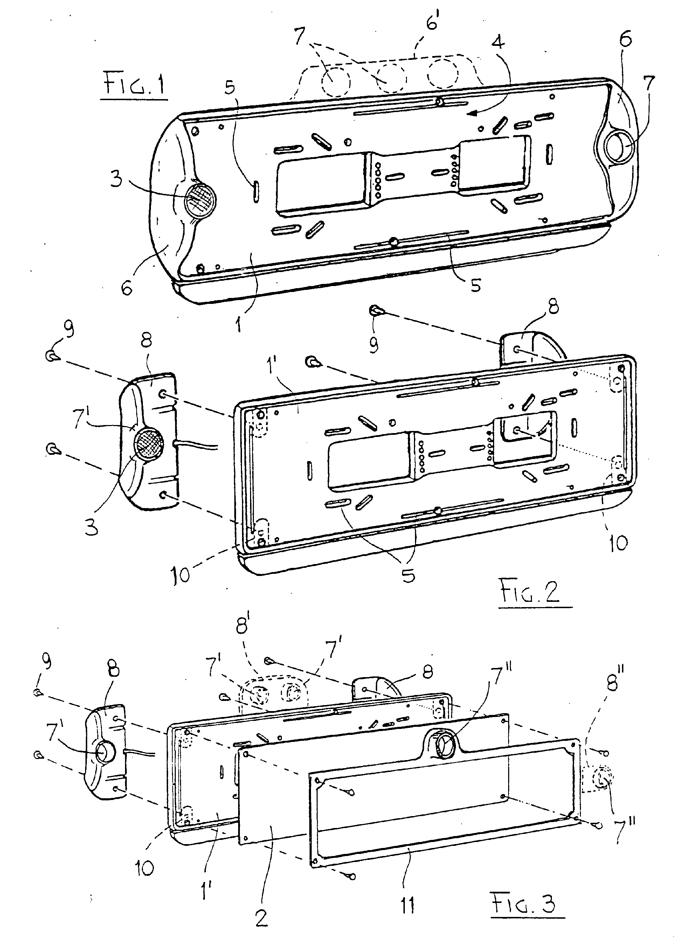

In Figure 1, the plate-holder comprises a seat 4 for the containment of a plate 2 and grooves 5 for its positioning with respect to the holes for the fastening screws, provided on the various models of vehicle bodies and/or bumpers. The plate-holder comprises also lateral integral extensions 6, whereon seats 7 are created suitable to house and fasten said electronic apparatuses or devices 3, or parts thereof.

The plate-holder 1' represented in Figure 2 does not comprise extensions 6, but lateral supports 8 can be attached thereto that may be fastened through dedicated screws 9 that can be hooked to counter-frames 10, or through the same screws usually employed for its fastening to vehicle bodies and/or bumpers. On the lateral supports 7, seats 7' are created suitable to house and fasten said electronic apparatuses and devices 3 or parts thereof.

Figure 3 shows instead a further embodiment of the present invention, wherein a plate-holder of type 1 (Fig. 1) or type 1' (Fig. 2) either with or without the lateral supports 8, is coupled to an external frame 11. Said frame, generally supplied by vehicle Importers, Agents and/or Motor Shows, besides keeping the plate in the right position, is usually personalized and used as a publicity means for commercial information.

In the case in point, and considering that it also has standardized sizes matching the plate-holder, it is utilizable also for the same object of the present invention. It can be formed either by comprising one or more seats 7" or one or more peripheral supports 8", either integral or added according to the above described logic, wherein there may be positioned or fastened as many electronic apparatuses or devices 3, or parts thereof.

In the description, reference has been made to integral extensions 6 and added lateral supports 8; this is only a possible non limiting positioning preference. Obviously, said extensions and/or supports are positioned peripherally at any point 6', 8', either on plate-holders 1, 1' or on frames 11, and may have one or more seats, 7',7',7" for the containment and fastening of electronic apparatuses or devices 3, or parts thereof.

By way of example, with the increasing miniaturization of electronic devices, there are at present available even telecameras so reduced in size as to allow their insertion in the above housings or seats 7',7',7", obtained and/or applied to plate-holders 1, 1' or to frames 11, to realize new systems for the front and/or rear view, useful to facilitate all the approaching, parking maneuvers and the like. In the same way, in the same seats external front transducers can be installed for devices suitable to facilitate driving in case of bad weather or poor visibility. Still other applications can be referred to transducers for laser sensors, advantageously utilizable to monitor the safety distance of vehicles, or to ultrasonic capsules utilized to facilitate parking, by detecting obstacles through the reflected echoes.

Although the present invention has been described and illustrated in conjunction with specific embodiments, offered for illustrative purpose only, it is evident that many alternatives and variations will be apparent to those skilled in the art in the light of the foregoing description.

Accordingly, the invention intends to encompass all the altematives and variations that fall within the spirit and scope of the appended claims.

## Claims

1. A front or rear plate-holder (1) for vehicles, comprising a containment seat (4) for a plate (2) having standardized shape and size and provided with means (5) for its fastening to the body, the bumpers and/or the plate-holder, **characterized in that** said plate-holder is provided also with at least a supporting means (6,6',8,8',8"), comprising at least a seat (7,7',7") for the containment and fastening of apparatuses or devices (3) positioned on the outside of vehicles.

2. The plate-holder according to claim 1, **characterized in that** the supporting means is a lateral integral extension (6) containing at least a seats (7) for the containment and fastening of said apparatuses or devices (3), positioned on the outside of vehicles.

3. The plate-holder according to claim 1, **characterized in that** the supporting means is a lateral support (8, 8') fastened by means of screws (9) and containing at least a seat (7') for the containment and fastening of apparatuses or devices (3) positioned on the outside of vehicles.

4. The plate-holder according to claim 3, **characterized in that** the lateral support (8, 8') is fastened by means of the same screws used for the fastening to the body and/or the bumpers of a vehicle.

5. The plate-holder according to any one of the preceding claims, **characterized in that** it comprises an external frame (11) of a standardized size that can be coupled to said plate-holder, said frame being provided with at least a seat (7") for the containment and fastening of apparatuses or devices (3) positioned on the outside of vehicles.

6. The plate-holder according to claim 5, **characterized in that** the supporting means (8") are integral with the extemal frame (11).

7. The plate-holder according to claim 5 or 6, **characterized in that** the extemal frame (11) is provided with at least a seat (7") for the containment and fastening of apparatuses or devices (3) positioned on the outside of vehicles.

8. The plate holder according to any one of the preceding claims, **characterized in that** the apparatuses or devices (3) positioned on the outside of vehicles are of the electronic type.

9. The plate holder according to any one of the preceding claims, **characterized in that** the apparatuses or devices (3) positioned on the outside of vehicles are telecameras, transducers, radar sensors and ultra-sound capsules.
